Europäisches Patentamt

European Patent Office

Office européen des brevets

(11) Numéro de publication: **0 376 780**
**A1**

# (12) DEMANDE DE BREVET EUROPEEN

(21) Numéro de dépôt: 89403429.7

(51) Int. Cl.5 **G21C 17/06**

(22) Date de dépôt: **11.12.89**

(30) Priorité: **28.12.88 FR 8817346**

(43) Date de publication de la demande:
**04.07.90 Bulletin 90/27**

(84) Etats contractants désignés:
**BE DE ES GB SE**

(71) Demandeur: **FRAMATOME**
**Tour Fiat 1, Place de la Coupole**
**F-92400 Courbevoie(FR)**

Demandeur: **COGEMA**
**2, rue Paul Dautier**
**F-78141 Velizy Villacoublay(FR)**

(72) Inventeur: **Gebelin, Bernard**
**7 Avenue de la Constellation**
**F-69160 Tassin La Demi-Lune(FR)**

(74) Mandataire: **Bouget, Lucien et al**
**Cabinet Lavoix 2, Place d'Estienne d'Orves**
**F-75441 Paris Cédex 09(FR)**

(54) **Dispositif de support et de positionnement de moyens de contrôle et d'outillages d'intervention sur des assemblages combustibles.**

(57) Le dispositif comporte un poste de commande (2) fixé sur le bord de la piscine (3), une perche de grande longueur (4) reliée au support du poste de commande (2) à son extrémité supérieure (5), des moyens de réglage de l'inclinaison de la perche (4) par rapport à la direction verticale, un support d'outillage (12) ainsi qu'un ensemble de déplacement du support d'outillage (12) dans deux directions perpendiculaires à l'axe de la perche (4), porté par le chariot (10). Des moyens de commande (14, 15) peuvent être actionnés depuis le poste de commande (2) pour déplacer le support d'outillage (12), par l'intermédiaire de l'ensemble de déplacement.

FIG.2

# Dispositif de support et de positionnement de moyens de contrôle et d'outillages d'intervention sur des assemblages combustibles

L'invention concerne un dispositif de support et de positionnement de moyens de contrôle et d'outillages d'intervention sur des assemblages combustibles d'un réacteur nucléaire à eau immergés dans une piscine.

Les assemblages combustibles constituant le coeur d'un réacteur nécessitent, après un certain temps de fonctionnement dans le réacteur, la mise en oeuvre d'examens et de contrôles pour s'assurer que ces assemblages n'ont pas subi de dégradations interdisant leur utilisation ultérieure dans le coeur du réacteur. Des contrôles dimensionnels peuvent être effectués pour vérifier les caractéristiques d'un assemblage après irradiation.

Dans le cas où certains défauts ont été décelés, il peut être possible d'effectuer certaines réparations ou certaines interventions qui permettent de réutiliser l'assemblage combustible pour le rechargement du coeur du réacteur.

Ces opérations de contrôle visuel ou par sonde ainsi que la mise en oeuvre d'outillages d'intervention sur l'assemblage combustible doivent être effectuées sous une certaine hauteur d'eau voisine de la protection biologique minimale de 3 mètres d'eau ou un peu supérieure. Ces opérations sont effectuées dans une piscine où l'assemblage dont la hauteur est voisine de 4 mètres est placé en position verticale.

Ces contrôles ou interventions peuvent donc être effectués dans certains cas sous une profondeur d'eau bien supérieure à 3 mètres et dans des positions quelconques suivant la hauteur de l'assemblage.

Parmi les interventions envisagées ou pour lesquelles des outillages ont déjà été conçus, on peut citer l'extraction de pièces ou particules étrangères à l'intérieur de l'assemblage combustible, le redressage des ailettes des grilles d'assemblages combustibles, le contrôle du glissement des crayons combustibles dans leur squelette et l'extraction de morceaux de crayons périphériques de l'assemblage ayant subi une rupture.

Dans tous les cas, il est nécessaire de venir mettre en place des moyens de contrôle visuels et un outillage d'intervention à un emplacement bien précis situé au voisinage de l'assemblage combustible. Le positionnement et l'orientation de l'outil d'intervention doivent également pouvoir être réglés à distance d'une manière précise et par une procédure simple et rapide.

On ne connaissait pas jusqu'ici de dispositif permettant d'effectuer la mise en place et le positionnement précis de moyens de contrôle et d'outillages d'intervention sur des assemblages combustibles immergés dans une piscine de stockage.

Le but de l'invention est donc de proposer un dispositif de support et de positionnement de moyens de contrôle et d'outillages d'intervention sur des assemblages combustibles d'un réacteur nucléaire à eau immergés dans une piscine, sous une certaine hauteur d'eau, ce dispositif pouvant être mis en oeuvre de manière simple et rapide permettant d'obtenir un positionnement extrêmement précis des moyens de contrôle et des outillages d'intervention.

Dans ce but, le dispositif suivant l'invention comporte :
- un poste de commande ayant un support fixé sur le bord de la piscine,
- une perche de grande longueur reliée au support du poste de commande à son extrémité supérieure et dispo sée dans une position sensiblement verticale à l'intérieur de la piscine de manière à présenter une partie située en vis-à-vis d'au moins un assemblage combustible disposé à l'intérieur de la piscine,
- des moyens de réglage de l'inclinaison de la perche par rapport à la direction verticale et de blocage de la perche dans au moins une position inclinée, fixés sur le support du poste de commande,
- un chariot monté mobile suivant la longueur de la perche coopérant avec des moyens de guidage portés par la perche,
- des moyens de déplacement du chariot commandés depuis le poste de commande,
- au moins un support d'outillage destiné à recevoir au moins un moyen de contrôle et au moins un outillage d'intervention,
- un ensemble de déplacement du support d'outillage dans deux directions différentes perpendiculaires à l'axe de la perche, porté par le chariot,
- des moyens de commande des déplacements du support d'outillage actionnables depuis le poste de commande,
- et des moyens de commande de l'outillage d'intervention et des moyens de contrôle, depuis le poste de commande.

Afin de bien faire comprendre l'invention, on va maintenant décrire, à titre d'exemple non limitatif, en se référant aux figures jointes en annexe, un mode de réalisation d'un dispositif de support et de positionnement suivant l'invention.

La figure 1 est une vue de face en élévation de l'ensemble du dispositif de support et de positionnement suivant l'invention.

La figure 2 est une vue de côté montrant l'ensemble du dispositif de support et de positionne ment en position dans une piscine de stockage d'assemblages combustibles.

La figure 3 est une vue de côté du poste de commande du dispositif représenté sur les figures 1 et 2.

La figure 4 est une vue de face du poste de commande, suivant 4 de la figure 3.

La figure 5 est une vue de face de l'ensemble de déplacement du support d'outillage, suivant 5 de la figure 6.

La figure 6 est une vue de côté de l'ensemble de déplacement du support d'outillage suivant 6 de la figure 5.

La figure 7 est une vue de face d'une variante de réalisation de l'ensemble de déplacement du support d'outillage.

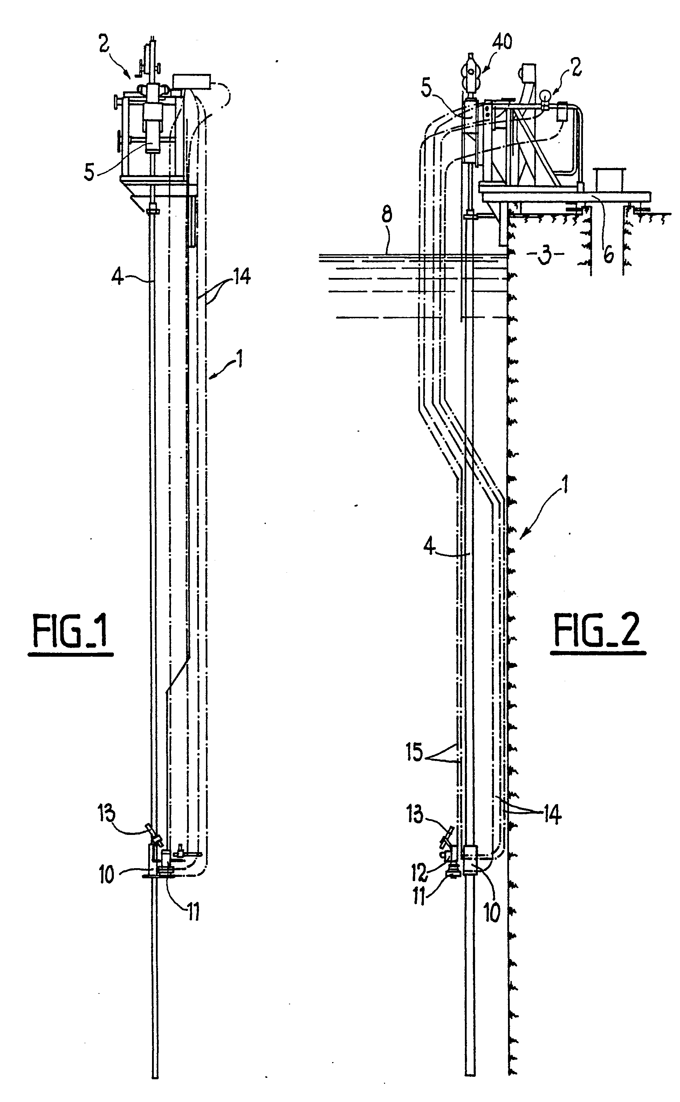

Sur les figures 1 et 2, on voit l'ensemble du dispositif désigné de manière générale par le repère 1.

Le dispositif comporte un poste de commande 2 fixé sur le bord supérieur d'une paroi 3 de la piscine et une perche 4 de grande longueur reliée à sa partie supérieure 5 au support 6 du poste de commande 2.

En position de service, la perche 4 est immergée sous le niveau 8 de l'eau de la piscine et présente une hauteur suffisante pour comporter une partie en vis-à-vis d'un assemblage combustible disposé verticalement, sur un support reposant sur le fond de la piscine.

Un chariot 10 est monté mobile dans la direction axiale de la perche 4 qui assure le guidage du chariot pendant ses déplacements.

Le chariot 10 porte un ensemble 11 de déplacement dans deux directions perpendiculaires à l'axe de la perche 4, d'un support 12 sur lequel sont fixés des moyens de contrôle visuel 13 tels que des caméras vidéo et un outillage d'intervention sur l'assemblage combustible.

L'ensemble de déplacement 11, les moyens de contrôle visuel (13) et l'outillage d'intervention peuvent être commandés à distance, depuis le poste de commande 2, grâce à des télécommandes 14, 15 qui peuvent être constituées par des télécommandes à billes, à déplacement rapide et à déplacement micrométrique.

De telles télécommandes à billes comportent une gaine à l'intérieur de laquelle un élément allongé d'actionnement rigide dans le sens de la poussée et déformable en flexion est monté glissant par l'intermédiaire de billes.

Une poignée de commande rapide et un dispositif de déplacement micrométrique sont reliés à une extrémité de l'élément allongé placée au niveau du poste de commande. Un opérateur peut agir à distance par poussée ou traction sur la poignée ou par actionnement du dispositif micrométrique, depuis le poste de commande 2.

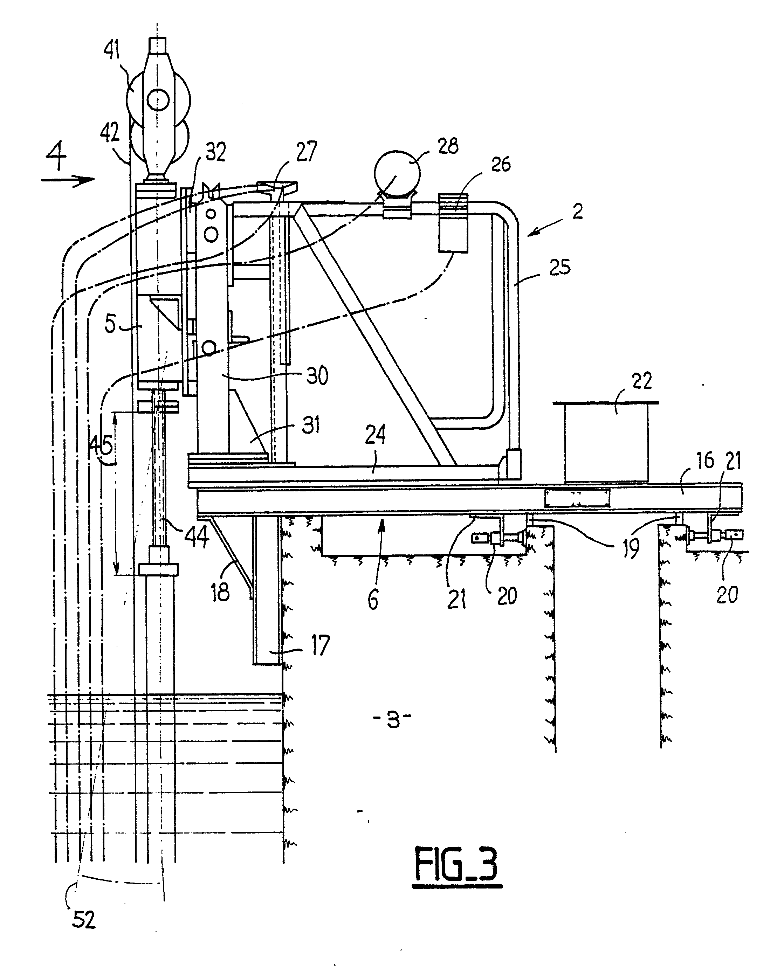

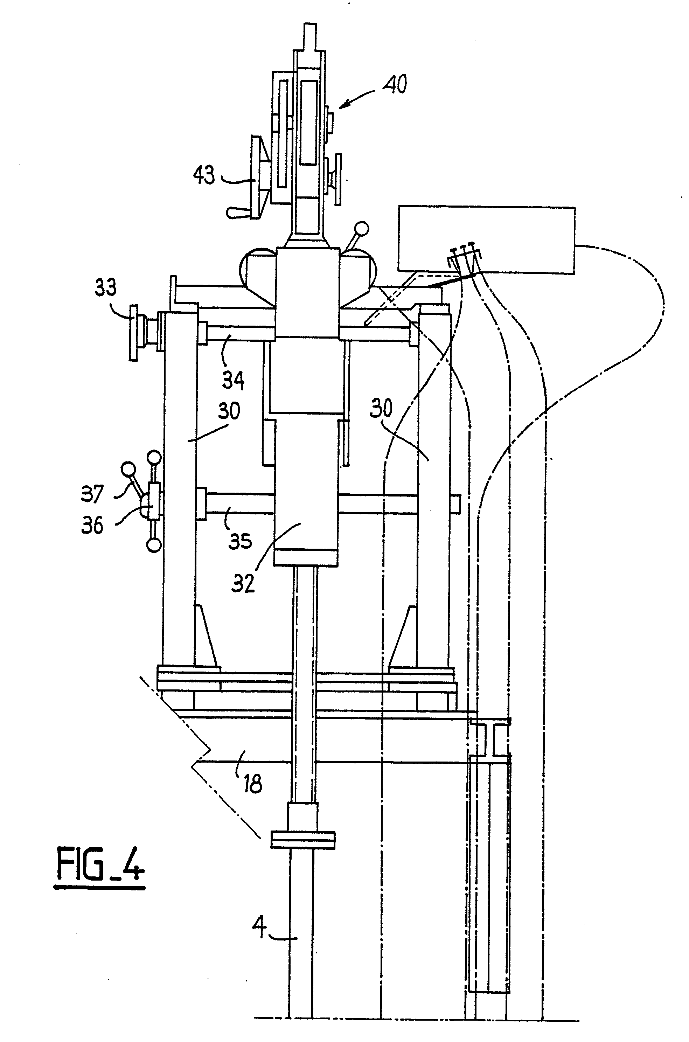

Sur les figures 3 et 4, on voit l'ensemble du poste de commande 2 dont le support 6 est constitué par un socle mécanosoudé 16 reposant sur la partie supérieure de la paroi 3 de la piscine et comportant des pattes d'appui verticales 17 constituées par des profilés reliés au socle 16 par des équerres de renforcement 18.

Le socle 16 repose, à sa partie arrière, sur la paroi 3 de la piscine, par l'intermédiaire de dispositifs d'appui 19 réglables en hauteur.

Des vérins mécaniques 20 fixés sur le socle 16 par l'intermédiaire d'équerres 21 permettent de fixer de manière rigide et totalement stable, le poste de commande 2, sur la paroi 3 de la piscine.

Le socle 6 porte de plus, à sa partie arrière un bac 22 rempli d'un matériau à haute densité tel que le plomb permettant d'équilibrer le couple de basculement exercé sur le support 6 du poste de commande, dans le cas d'efforts importants exercés au niveau du support 12, ces efforts étant repris par le support 6 du poste de commande, par l'intermédiaire de la perche 4.

La position du bac 22 sur le socle 16 peut être réglée pour modifier le couple d'équilibrage. Le socle 16 du support 6 porte une passerelle 24 comportant une rambarde 25 sur laquelle sont fixées les poignées de commande 26 des télécommandes à billes telles que 14 et 15, différentes manettes de réglage et des voyants 27 et un contrôleur d'efforts et de déplacements 28, de manière qu'un opérateur placé sur la passerelle 24 puisse assurer la mise en place de l'outillage et des moyens de contrôle et la surveillance et la commande de l'outillage d'intervention. Des écrans vidéo placés à proximité de la passerelle fournissent en permanence à l'opérateur une image de la zone d'intervention grâce aux caméras vidéo telles que la caméra 13.

La passerelle 24 porte, à sa partie antérieure, un support 30 constitué par deux colonnes verticales rigidement fixées sur la passerelle, par l'intermédiaire d'équerres 31.

La partie supérieure 5 de la perche 4 comporte une partie de fixation 32 dirigée vers la passerelle 24 et disposée entre les colonnes du support vertical 30. La perche 4 est reliée au support 30, par l'intermédiaire de la partie de fixation 32 rigidement reliée à la partie supérieure 5 de la perche.

Une vis 34 est montée transversalement et mobile en rotation, entre les colonnes du support 30. Un volant 33 solidaire de l'extrémité de la vis 34 peut être actionné manuellement par l'opérateur, depuis la passerelle 24.

La partie de fixation 32 de la perche 4 comporte un écrou engagé sur la vis 34. La mise en rotation du volant 33 dans un sens ou dans l'autre permet ainsi de déplacer la partie de fixation 32 et l'ensemble de la perche 4, dans une direction transversale parallèle à la paroi 3 de la piscine.

Un arbre 35 est également monté transversalement et mobile en rotation entre les colonnes du support 30, en-dessous de la vis 34 et dans une disposition parallèle à cette vis.

Une poignée 36 solidaire de l'extrémité de l'axe 35 permet de faire tourner cet axe dans un sens ou dans l'autre, par une action manuelle de l'opérateur, depuis la passerelle du poste de commande.

Un dispositif de blocage à cliquets 37 est associé à la poignée 36 et permet de bloquer l'axe 35 en rotation, dans une position définie. Une came montée sur l'arbre 35 vient en appui dans une cavité de la partie de fixation 32 de la perche 4, de manière à faire varier l'inclinaison de la perche 4 par rapport à la direction verticale, en faisant tourner la poignée 36. La came est montée solidaire en rotation de l'axe 35 et glissante, dans la direction transversale, sur cet axe, par l'intermédiaire d'un jeu de cannelures et de rainures correspondantes.

Le dispositif de blocage à cliquets 37 permet de fixer l'inclinaison de la perche 4, après un déplacement par basculement sous l'effet de la came entraînée par l'axe 35, en appui sur la partie de fixation 32.

On peut ainsi placer la perche 4 très rapidement dans une position inclinée par rapport à la verticale, telle que la position symbolisée par l'axe 52 sur la figure 3.

La partie supérieure 5 de la perche 4 porte un treuil 40 comportant une poulie 41 sur laquelle passe un câble 42 et un volant de manoeuvre 43 entraînant la poulie 41 en rotation, par l'intermédiaire d'un engrenage.

L'opérateur peut accéder à la poignée du volant de manoeuvre 43 pour le faire tourner dans un sens ou dans l'autre, afin d'entraîner la poulie 41 et de déplacer le câble 42 soit vers le haut soit vers le bas.

Le câble 42 est relié à sa partie inférieure à une patte de fixation du chariot 10, de manière que ce chariot 10 puisse être déplacé suivant la longueur de la perche 4 par une simple action manuelle depuis le poste de commande.

Le chariot 4 comporte des patins de guidage coopérant avec des rails disposés suivant la longueur de la perche 4.

Le déplacement du chariot 10 permet un réglage de la position du support d'outillage 12 suivant la hauteur de l'assemblage.

Le déplacement du chariot 10 sur la perche 4 permet d'accéder rapidement à la zone d'intervention de l'outillage sur l'assemblage combustible mais ne permet pas un réglage précis de cette position.

Un dispositif à vis 44 permet de déplacer à vitesse lente la perche 4 par rapport à sa partie supérieure 5, sur une course 45 dont la longueur peut être de l'ordre de 600 mm. On peut ainsi réaliser un positionnement très précis du support d'outillage 12 suivant la hauteur de l'assemblage.

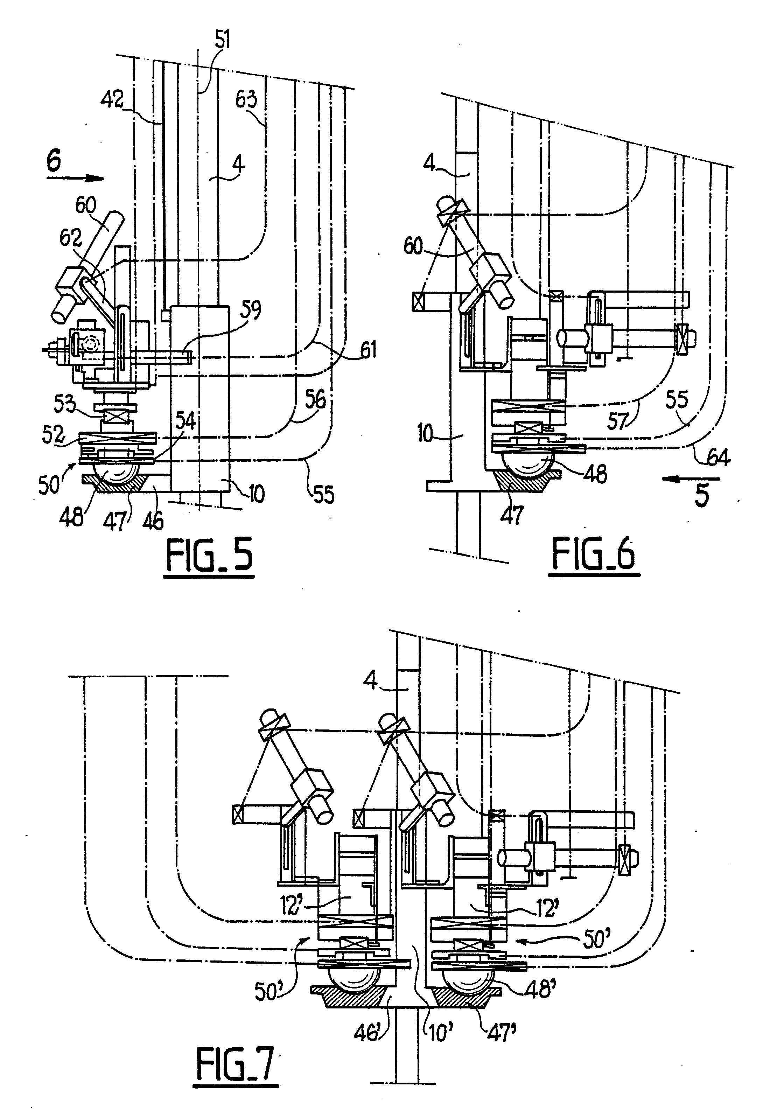

Sur les figures 5 et 6, on voit le chariot 10 monté glissant sur la perche 4 dans la direction axiale et supportant, par l'intermédiaire de moyens de réglage de position qui seront décrits plus loin, le support d'outillage 12.

Le chariot 10 comporte, à sa partie inférieure, un bras 46 constituant un palier de rotule 47 à son extrémité.

Le support d'outillage 12 est porté par le bras 46, par l'intermédiaire d'une rotule 48 montée rotulante dans le palier 47 et d'un ensemble de déplacement 50 comportant des chariots qui peuvent être déplacés dans deux directions perpendiculaires entre elles et perpendiculaires à l'axe 51 de la perche 4.

L'ensemble 50 comporte un premier chariot 52 ou chariot inférieur mobile dans des glissières reposant sur la rotule 48, par l'intermédiaire d'un dispositif de déplacement en rotation 54 permettant de régler l'orientation de l'ensemble à chariots croisés 50 et du support 12, autour de l'axe de la rotule 48. Le dispositif d'orientation 54 peut être commandé par une télécommande à billes 55 dont l'extrémité opposée à l'extrémité reliée au dispositif d'orientation 54 se trouve au niveau du poste de commande.

Le chariot inférieur 52 porte des rails de guidage d'un chariot supérieur 53, ces rails de guidage étant dirigés dans une direction perpendiculaire à la direction des rails de guidage du chariot inférieur 52.

La direction des rails de guidage du chariot 52 correspond à une direction sensiblement perpendiculaire à la paroi 3 de la piscine, alors que la direction des rails de guidage du chariot supérieur 53 correspond sensiblement à une direction parallèle à la paroi 3.

Les déplacements des chariots 52 et 53 sont commandés par des télécommandes à billes respectivement 56 et 57.

Le support 12 porte un outil d'intervention 59 et un ensemble de caméras vidéo telles que 60.

L'outillage d'intervention 59 peut être actionné grâce à une télécommande à billes 61.

L'inclinaison de la caméra 60 sur son bras de support 62 peut être réglée grâce à une télécommande à billes 63.

Le dispositif suivant l'invention permet donc de régler ou de prérégler la position du support d'outillage de manière très précise, avec des possibilités de déplacement et d'inclinaison extrêmement nombreuses.

Il est ainsi possible d'utiliser des outillages d'intervention dans des positions très diverses et pour des tâches extrêmement variées.

Les mouvements d'approche et de positionnement rapides du support d'outillage peuvent être obtenus par déplacement du chariot grâce au treuil 40 et par basculement de la perche 4 en position inclinée, autour de l'axe constitué par la vis 34.

Un positionnement précis du support d'outillage en hauteur peut ensuite être obtenu par déplacement à vitesse lente de la perche dans la direction verticale, grâce au dispositif à vis 44.

Le positionnement précis du support d'outillage dans des directions horizontales peut être obtenu grâce au dispositif d'orientation 54 et grâce à l'ensemble à chariots croisés 50.

Le montage rotulant de l'ensemble à chariots croisés permet d'assurer une parfaite horizontalité des directions de déplacement des chariots.

Lorsqu'une position correcte est assurée, la rotule est bloquée en position grâce à une télécommande 64.

Sur la figure 7, on représenté une variante de réalisation du dispositif suivant l'invention dans laquelle le chariot 10' porte, par l'intermédiaire de deux bras 46', deux ensembles à chariots croisés 50' indépendants situés de part et d'autre du chariot 10' et de la perche 4.

Le montage de chacun des ensembles à chariots croisés 50' est identique au montage de l'ensemble à chariots croisés 50 qui a été décrit plus haut.

Chacun des ensembles à chariots croisés 50' porte un support d'outillage 12' dont le positionnement par rapport à l'assemblage combustible peut être réalisé indépendamment du second support d'outillage.

Un dispositif tel que représenté sur la figure 7 peut être utilisé pour réaliser plusieurs opérations différentes successives sur l'assemblage, sans avoir à changer l'outillage.

Par exemple, sur l'un des supports d'outillage, sera monté un outillage permettant d'effectuer l'ébauchage d'une opération, par exemple le redressement d'une ailette de guidage de l'assemblage combustible et sur l'autre support d'outillage 12' sera monté un second outil permettant de réaliser la finition, par exemple permettant de placer une ailette de guidage dans sa position d'inclinaison correcte.

On peut également imaginer d'autres dispositions permettant d'effectuer des déplacements plus ou moins indépendants d'au moins deux supports d'outillage. On peut par exemple imaginer le montage rotulant d'un premier chariot à déplacement transversal sur lequel sont montés deux chariots supérieurs à déplacement longitudinal qui peuvent être commandés simultanément ou indépendamment, en fonction des différentes interventions à effectuer.

Les deux chariots longitudinaux peuvent être reliés ensemble pour se déplacer simultanément ou, au contraire, indépendants l'un de l'autre. Les chariots croisés peuvent être débrayés dans certaines phases de l'intervention.

On voit que les avantages du dispositif suivant l'invention sont de faciliter et de réduire les temps d'intervention sur les assemblages combustibles, en permettant un positionnement rapide, précis et parfaitement adapté de l'outillage par rapport à l'assemblage combustible.

Il est également possible de placer l'assemblage combustible sur lequel on doit effectuer une intervention, dans une position permettant de faciliter l'intervention de l'outillage, en fonction des possibilités du dispositif de support et de positionnement. On peut par exemple placer l'assemblage combustible ou tout autre matériel irradié sur lequel on désire effectuer une intervention, sur un support d'une hauteur telle que l'intervention ait lieu sur la hauteur minimale assurant la protection biologique des opérateurs.

On peut également envisager d'intervenir sur un assemblage suspendu au crochet du pont roulant de la piscine où se déroule l'intervention.

On peut également imaginer d'équiper le dispositif suivant l'invention de moyens de motorisation se substituant aux télécommandes à billes ou autres télécommandes de type manuel.

On peut alors commander à distance des moyens de motorisation pour obtenir des déplacements indépendants ou simultanés des divers organes mobiles du dispositif. On peut également programmer les déplacements de l'ensemble à chariots croisés, pour effectuer des interventions répétitives.

Le dispositif suivant l'invention peut être utilisé pour réaliser des examens visuels des assemblages grâce à des caméras vidéo, pour effectuer des contrôles dimensionnels ou tout type de contrôles utilisant des sondes à courant de Foucault ou à ultrasons.

Le dispositif suivant l'invention peut être utilisé également pour réaliser des interventions nécessitant la mise en oeuvre d'outillages divers, au cours des opérations d'entretien et de réparation des assemblages combustibles, avant leur rechargement dans le coeur du réacteur.

**Revendications**

1.- Dispositif de support et de positionnement de moyens de contrôle et d'outillages d'intervention sur des assemblages combustibles d'un réacteur nucléaire à eau immergés dans une piscine, sous une certaine hauteur d'eau, caractérisé par le fait qu'il comporte :

- un poste de commande (2) ayant un support (6) fixé sur le bord (3) de la piscine,
- une perche (4) de grande longueur reliée au support du poste de commande à son extrémité supérieure (5) et disposée dans une position sensiblement verticale à l'intérieur de la piscine de manière à présenter une partie située en vis-à-vis d'au moins un assemblage combustible disposé à l'intérieur de la piscine,
- des moyens (35, 36) de réglage de l'inclinaison de la perche (4) par rapport à la direction verticale et de blocage de la perche dans au moins une position inclinée, fixés sur le support (6) du poste de commande (2),
- un chariot (10) monté mobile suivant la longueur de la perche (4) coopérant avec des moyens de guidage portés par la perche (4),
- des moyens de déplacement (40, 41 , 42, 43) du chariot (10) commandés depuis le poste de commande (2),
- au moins un support d'outillage (12) destiné à recevoir au moins un moyen de contrôle (13) et au moins un outillage d'intervention (59),
- un ensemble (50) de déplacement du support d'outillage (12) dans deux directions différentes perpendiculaires à l'axe de la perche (4) , porté par le chariot (10),
- des moyens de commande (56, 57) des déplacements du support d'outillage (50) actionnables depuis le poste de commande (2),
- et des moyens de commande (61, 63) des moyens de contrôle (60) et de l'outillage (59), depuis le poste de commande (2).

2.- Dispositif suivant la revendication 1, caractérisé par le fait que le support (6) du poste de commande (2) comporte une structure verticale (30) dans laquelle est montée mobile en rotation une vis (34) horizontale et que la partie supérieure (5) de la perche (4) comporte une partie de fixation (32) présentant un écrou engagé sur la vis (34) de manière à coopérer avec cette vis (34) pour assurer le déplacement de la perche dans une direction horizontale sensiblement parallèle au bord de la piscine (3), par mise en rotation de la vis (34) dans un sens ou dans l'autre.

3.- Dispositif suivant la revendication 2, caractérisé par le fait qu'un axe (35) parallèle à la vis (34) est situé en-dessous de cette vis et monté mobile en rotation dans le support vertical (30), l'axe (35) étant solidaire en rotation d'une came venant en appui sur la partie de fixation (32) de la perche (4), pour assurer l'inclinaison de la perche (4) par rotation autour de la vis (34), la came étant actionnée par rotation de l'arbre (35) dans un sens ou dans l'autre.

4.- Dispositif suivant l'une quelconque des revendications 1 à 3, caractérisé par le fait que le moyen de déplacement du chariot est constitué par un treuil (40) fixé sur la partie supérieure (5) de la perche (4) comportant un câble (42) enroulé sur une poulie d'actionnement (41) dont l'extrémité opposée à la poulie (41) est reliée au chariot (10).

5.- Dispositif suivant l'une quelconque des revendications 1 à 4, caractérisé par le fait qu'il comporte de plus un dispositif de réglage à vis (44) de la position verticale de la perche (4).

6.- Dispositif suivant l'une quelconque des revendications 1 à 5, caractérisé par le fait que l'ensemble (50) de déplacement du support d'outillage (12) dans deux directions perpendiculaires à l'axe de la perche (4) est constitué par un dispositif à chariot à déplacements croisés dans deux directions perpendiculaires.

7.- Dispositif suivant la revendication 6, caractérisé par le fait que le dispositif à chariots à déplacements croisés comporte deux chariots à déplacement longitudinal assurant le support d'outillages qui peuvent être reliés pour se déplacer simultanément ou, au contraire, indépendants.

8. - Dispositif suivant la revendication 7, caractérisé par le fait que l'un au moins des chariots peut être débrayé pendant certaines phases de l'intervention.

9.- Dispositif suivant la revendication 6, caractérisé par le fait que l'ensemble à chariot à déplacements croisés (50) est porté par le chariot (10) mobile suivant la direction axiale de la perche (4), par l'intermédiaire d'un ensemble rotulant (47, 48).

10.- Dispositif suivant la revendication 9, caractérisé par le fait que l'ensemble rotulant (47, 48) comporte un dispositif de réglage et de blocage (54) actionnable à distance.

11.- Dispositif suivant l'une quelconque des revendications 1 à 10, caractérisé par le fait que les moyens de commande des déplacements du support d'outillage (12) et les moyens de commande de l'outillage et des moyens de contrôle depuis le poste de commande (2) sont constitués par des télécommandes à billes.

12.- Dispositif suivant l'une quelconque des revendications 1 à 11, caractérisé par le fait que le poste de commande (2) est constitué par un support (6) sur lequel est montée une passerelle (24) et un support (30) de l'extrémité supérieure (5) de la perche (4), l'ensemble des moyens de commande étant accessibles pour un opérateur, depuis la passerelle (24).

FIG.1

FIG.2

-3-

**FIG_3**

FIG_4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 059 301 (NTG NUKLEARTECHNIK GmbH) <br> * Page 7, ligne 11 - page 8, ligne 15; page 9, lignes 7-22; figure 1 * <br> --- | 1,4 | G 21 C 17/06 |
| A | EP-A-0 192 406 (WESTINGHOUSE) <br> * Page 24, lignes 16-25; figures 1,3,11 * <br> --- | 1,6 | |
| A | FR-A-2 525 799 (LEGRAND) <br> * Page 7, ligne 7 - page 8, ligne 2; figures 1,4 * <br> ----- | 1,12 | |

**DOMAINES TECHNIQUES RECHERCHES (Int. Cl.5)**

G 21 C 17/00
G 21 C 19/00
G 21 C 3/00

**Le présent rapport a été établi pour toutes les revendications**

| Lieu de la recherche | Date d'achèvement de la recherche | Examinateur |
|---|---|---|
| LA HAYE | 23-03-1990 | JANDL F. |